(19) Europäisches Patentamt
European Patent Office
Office européen des brevets

(11) **EP 4 389 936 A1**

(12) **EUROPEAN PATENT APPLICATION**

(43) Date of publication:
**26.06.2024 Bulletin 2024/26**

(21) Application number: **22216122.6**

(22) Date of filing: **22.12.2022**

(51) International Patent Classification (IPC):
**C25B 1/04** $^{(2021.01)}$   **C02F 1/00** $^{(2023.01)}$
**C25B 15/02** $^{(2021.01)}$   **C25B 15/029** $^{(2021.01)}$
**C25B 15/08** $^{(2006.01)}$

(52) Cooperative Patent Classification (CPC):
**C25B 1/04; C02F 1/4618; C25B 15/02;**
**C25B 15/029; C25B 15/08; C25B 15/085;**
**C25B 15/087;** C02F 1/46104; C02F 2001/4619;
C02F 2201/46115; C02F 2201/4612;
C02F 2201/4618

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **McPhy Energy**
**38100 Grenoble (FR)**

(72) Inventor: **NEBEN, Matthias**
**15711 Königs Wusterhausen (DE)**

(74) Representative: **IP Trust**
**2, rue de Clichy**
**75009 Paris (FR)**

(54) **ALKALINE WATER ELECTROLYSIS PROCESS AND ALKALINE WATER ELECTROLYZER**

(57)     An alkaline water electrolyzer (200) comprising an electronic controller (Cont), a stack (Stck) of electrolysis cells each comprising an anode and a cathode, the electrolyzer being configured to contain an electrolyte made of an anolyte ($An_{KOH}$) and a catholyte ($Cath_{KOH}$), the electrolyzer comprising a system (Sys) controlled by the electronic controller (Cont) configured to maintain a concentration of an impurity in the electrolyte within a target range by measuring a characteristic representative of the concentration of the impurity in the electrolyte and, in response to the measured concentration of the impurity, add a quantity of the impurity into the electrolyte.

Fig. 2

EP 4 389 936 A1

**Description**

**FIELD OF THE INVENTION**

The technical domain of the invention is that of alkaline water electrolysis for the production of hydrogen.

**BACKGROUND OF THE INVENTION**

Hydrogen ($H_2$) is an energy vector that is gathering a lot of attention due its potential to be produced in an environment-friendly manner and to support the emergence of low-carbon emission industrial processes and transportation means.

As for hydrogen production, electrochemical water splitting is a well-known approach that is sustainable and pollution-free.

This approach can be implemented by alkaline water electrolysis, in which electrolysis of water is performed by flowing a direct current between an anode and a cathode immersed in an aqueous alkaline electrolyte.

At the cathode, electrons provided by the direct current react with water to produce hydrogen gas and hydroxide ions according to the reaction:

$$2H_2O + 2e^- \rightarrow 2H_2 + 2OH^-$$

At the anode, the hydroxide ions release their electrons in excess to produce water and oxygen gas according

$$2OH^- \rightarrow \frac{1}{2}O_2 + H_2O + 2e^-$$

to the reaction:

These electrodes are separated by a thin porous foil commonly referred to as diaphragm, a separator non-conductive to electrons, separating the product gases and letting hydroxide ions ($OH^-$) pass from one electrode to the other.

Ionic conductivity is supplied by the aqueous alkaline electrolyte, usually a solution of potassium hydroxide (KOH) or sodium hydroxide (NaOH).

Alkaline water electrolysis is an established technology applicable to industrial scale. Furthermore, performing water electrolysis under alkaline conditions allows non-noble metal oxides such as cobalt and nickel derivatives to be used for the anode and the cathode, as a result of their favorable OER (Oxygen Evolution reaction) activities in basic solutions, which gives alternatives to more expensive noble metals such as ruthenium or iridium.

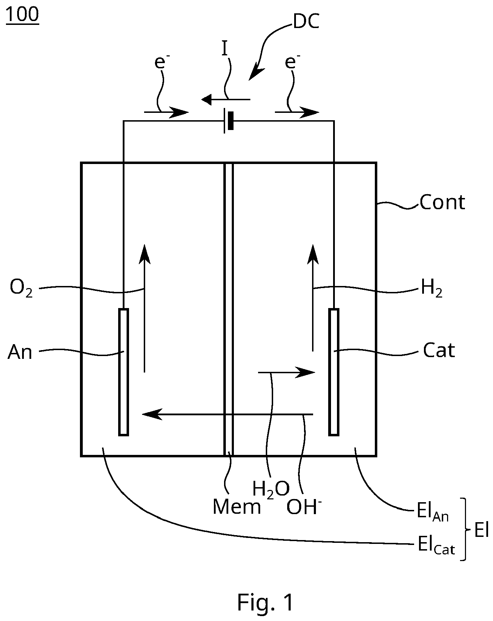

Figure 1 illustrates an electrolysis cell 100 configured to split water, with a container Cont containing an aqueous alkaline electrolyte El in which a cathode Cat and an anode An are immersed.

The cathode and the anode are separated by a diaphragm Dia and connected to a direct electric current source DC imposing the flow of an electric current I between the anode and the cathode, through the electrolyte El and the diaphragm Dia, the current I providing electrons $e^-$ to the cathode and evacuating electrons $e^-$ from the anode.

The diaphragm is able to let pass hydroxide ions $OH^-$ but otherwise contains oxygen gas $O_2$ and hydrogen gas $H_2$ respectively on the anode side and on the cathode side of the electrolysis cell, thereby facilitating collect and purification of gas produced by the reactions detailed above.

The electrolyte on the side of the anode is referred to as the anolyte $El_{An}$, and the electrolyte on the side of the cathode is referred to as catholyte $El_{Ca}$.

In this example, the electrodes, anode and cathode, are made of or coated with Raney nickel used as catalyst of the electrolysis, the electrolyte is made of potassium hydroxide KOH, and the diaphragm is an anion exchange membrane (AEM) such as a membrane made of Zirfon®.

Figure 1 illustrates a single cell; an industrial electrolyzer aimed at producing hydrogen on a large scale usually comprises several dozen of such cells fluidically connected in parallel and electrically connected in series in the form of so-called "stacks".

In actual operations of an electrolyzer, the electrolyte contains impurities originating from the deionized water and the fresh potassium hydroxide used to make the electrolyte itself, and from elements of the hydraulic circuitry (valves, pumps, pipes, gas/liquid separators...) used to circulate the electrolyte in the stack of cells.

The two reactions detailed above are the main and intended reactions occurring during the production of hydrogen by water electrolysis.

However, due to the presence of certain amounts of impurities, a number of unintended reactions occur as well, some of them being detrimental to the efficiency of the overall process and to the components of the electrolyzer itself, in particular to the cathode.

Contamination of the electrolyte usually slowly builds up, until it becomes necessary to replace, at least partly, the electrolyte with fresh electrolyte during a periodic maintenance of the electrolyzer; this is especially the case when the elements of the hydraulic circuitry (valves, pumps, pipes...) contain iron.

Such operations are costly, affect sustainability as used potassium hydroxide will be treated as a chemical waste, impede the normal functioning or the electrolyzer, and the sub-optimal functioning due to the impurities lowers the efficiency of hydrogen production.

## OBJECT OF THE INVENTION

In view of the issues above, the applicant considered optimizing the functioning of an electrolyzer with respect to the concentration of impurities in the electrolyte.

As a result, the applicant determined a water-spliting alkaline electrolysis process taking into account the concentration of impurities in the electrolyte, and a system designed to implement this process.

## SUMMARY OF THE INVENTION

To this effect, a first aspect of the invention relates to an alkaline water electrolysis process making use of an electrolyzer comprising a stack of electrolysis cells each comprising an anode and a cathode, the electrolyzer being configured to contain an electrolyte made of an anolyte and a catholyte, the process comprising the steps of measuring at least one characteristic representative of a concentration of an impurity in the electrolyte, and regulating the concentration of the impurity in the electrolyte based on the at least one measured characteristic in the electrolyte so as to maintain a concentration of the impurity within a target range by lowering the concentration of the impurity in the electrolyte or delivering a quantity of the impurity into the electrolyte.

A primary advantage of this process is to achieve a good performance with a better control of the quality of the electrolyte.

Other advantages include an enhanced sustainability electrolyte consumption will be reduced, a more regular functioning or the electrolyzer, and better functioning parameters of hydrogen production as presence of impurities in the electrolyte and on the electrodes is better controlled.

According to further non limitative features of the first aspect of the invention, either taken alone or in any technically feasible combination:

- the anode can comprise nickel, the impurity can be iron, and the target range can be defined as between 0.2 mg/l and 6 mg/l;
- the step of regulating the concentration of the impurity in the electrolyte can comprise a step of replacing at least a part of the electrolyte comprised in the electrolyzer;
- the process can comprise a step of injecting a quantity of the impurity into the electrolyte based on a first one of the at least one measured characteristic;
- at the step of injecting the quantity of the impurity into the electrolyte, the quantity of the impurity can be injected into the anolyte;
- the process can comprise a step of diluting the electrolyte based on a second one of the at least one measured characteristic;
- the process can comprise a step of filtering the impurity out of the electrolyte based on a second one of the at least one measured characteristic;
- the step of filtering the impurity out of the electrolyte can comprise a substep of diluting the electrolyte and a substep of alkaline element supplementation into the electrolyte so as to make up for the dilution of the electrolyte and a loss of alkaline element during the step of filtering the impurity out of the electrolyte;
- the electrolyte can be diluted with deionized water and the alkaline element supplementation can consist in adding a KOH solution to the electrolyte; and
- the step of filtering the impurity out of the electrolyte can comprise a substep of passing the electrolyte through a filtering membrane filtering the impurity out of the electrolyte.

A second aspect of the invention relates to an alkaline water electrolyzer comprising an electronic controller, a stack of electrolysis cells each comprising an anode and a cathode, the electrolyzer being configured to contain an electrolyte made of an anolyte and a catholyte, the electrolyzer further comprising a system controlled by the electronic controller configured to maintain a concentration of an impurity in the electrolyte within a target range by measuring a characteristic representative of the concentration of the impurity in the electrolyte and, in response to the measured concentration of the impurity, add a quantity of the impurity into the electrolyte.

According to further non limitative features of the first aspect of the invention, either taken alone or in any technically feasible combination:

- the anode can comprises nickel, the impurity can be iron, and the target range can be defined as between 0.2 mg/l and 6 mg/l;
- the system can comprises a first measurement means configured to measure a first value of a characteristic representative of the concentration of the impurity in the electrolyte, and a device configured to inject a solution containing a quantity of the impurity into the electrolyte, the electronic controller being further configured to command the device so as to inject the solution containing a quantity of the impurity into the electrolyte based on the measured first value;
- the system can comprise a second measurement means configured to measure a second value of a characteristic representative of a concentration of the impurity in the electrolyte; and a dilution device configured to dilute the catholyte, the electronic controller being further configured to command a directing device so as to direct the electrolyte toward the diluting device based on the measured second value; and
- the system can comprise a second measurement means configured to measure a second value of a characteristic representative of a concentration of the impurity in the electrolyte, and a filter configured to filter the impurity out of the electrolyte, the electronic controller being further configured to command a directing device so as to direct the electrolyte toward the filter based on the measured second value, the directing device being configured so as to direct the catholyte toward the filter based on the measured second value.

## FIGURES

Many other features and advantages of the present invention will become apparent from reading the following detailed description, when considered in conjunction with the accompanying drawings, in which:

- Figure 1 illustrates a conventional water splitting electrolysis cell ;
- Figure 2 illustrates a first type of electrolyzer according to the invention ;
- Figure 3 illustrates a second type of electrolyzer according to the invention ;
- Figure 4 illustrates a first process according to the invention ; and
- Figure 5 illustrates a second process according to the invention.

## DETAILED DESCRIPTION OF A SPECIFIC EMBODIMENT OF THE INVENTION

As a specific application for a content control of the electrolyte, the applicant performed a number of experiments revolving around the concentration of iron as an impurity in the electrolyte and the performances of an alkaline water electrolysis cell, primarily when the electrodes, anode and cathode, are made of or coated with Raney nickel used as catalyst of the electrolysis, and the electrolyte is made of potassium hydroxide KOH.

Other tests involved other anode/cathode configurations such as pure nickel mesh/Raney nickel or pure nickel mesh/PGM coated mesh where PGM stand for Platinum Group Metal.

It appeared that the iron concentration tends to decrease during operation of the cell, independently of the initial iron concentration in the electrolyte.

This is explained by (i) incorporation of iron into an NiOOH layer forming onto the anode during operation and (ii) deposition of iron onto the cathode surface.

In parallel, it was observed that iron content in the KOH significantly affects the performance of the cell: an enhancement of the cell voltage during operation correlated with a concomitant reduction in the iron concentration.

In contrast, the activity of the cathode was independent of the iron content in the electrolyte.

Accordingly, the occurring overpotential of the anode, defined as the difference between the equilibrium potential for a given reaction and the potential at which the catalyst operates at a specific current under specific conditions, is interpreted as being positively influenced by the iron incorporation in an NiOOH layer forming onto the anode surface.

The exact mechanisms of performance enhancement due to iron at the anode are not completely clear, but some possible explanations are the following: (a) incorporation of iron into the anode increases the activity of the catalyst and improve the OER (Oxygen Evolution Reaction) generating gas oxygen $O_2$, (b) iron assists $Ni^{3+}$ oxidation to form highly reactive $Ni^{4+}$ ions in the NiOOH matrices, (c) synergistic effect with iron sites that helps OER kinetics as they have optimum bond energetics for the adsorption of OER intermediates and with electrochemically generated $Fe^{4+}$ ions and $Ni^{4+}$ ions that establish a synergism between them under OER condition in which $Fe^{4+}$ stabilizes the oxyl radical formed as an intermediate and $Ni^{4+}$ ions promote O-O coupling to promote $O_2$ evolution.

Such mechanisms can be found in the relevant literature.

On the other hand, iron dissolved in the KOH electrolyte has a poisonous effect on the cathode.

Indeed, iron deposition onto the cathode tend to coat the Raney nickel surface of the electrode with iron, which is not a catalyst as efficient as the Raney nickel to split water $H_2O$ into hydrogen gas $H_2$ and hydroxide ion $OH^-$. This effect is also especially detrimental when the cathode is made of platinum group metal (ruthenium, rhodium, palladium, osmium, iridium, and platinum).

We see that to limit the detrimental effect of iron to the cathode, iron concentration in the electrolyte has to be capped, but the same concentration has to be high enough to positively affect reactions at the anode.

The applicant determined a specific range of iron concentration in the electrolyte, designed below as the target range, that satisfies both constraints: an iron concentration comprised between 0.25 mg/l and 6 mg/l, preferably between 0.5 mg/l and 3 mg/l, more preferably between 0.5 mg/l and 2.5 mg/l, allows the anode to function efficiently as a catalyst while preventing degradation of the functionality of the cathode.

This concerns primarily the situation where a KOH is used as an electrolyte, but can be extended to other alkaline solutions such as NaOH-based electrolytes, which have basically the same chemistry as KOH-based electrolytes.

Also, observations of the suitability of the above ranges of iron concentration have been confirmed for Ni-based cathodes as well as for PGM-based cathodes (PGM standing for Platinum Group Metals, including platinum, palladium, rhodium, ruthenium, iridium, and osmium), so that such electrodes, at least, may be employed as well to form the cathode.

The electrolyzer - First Type, dilution

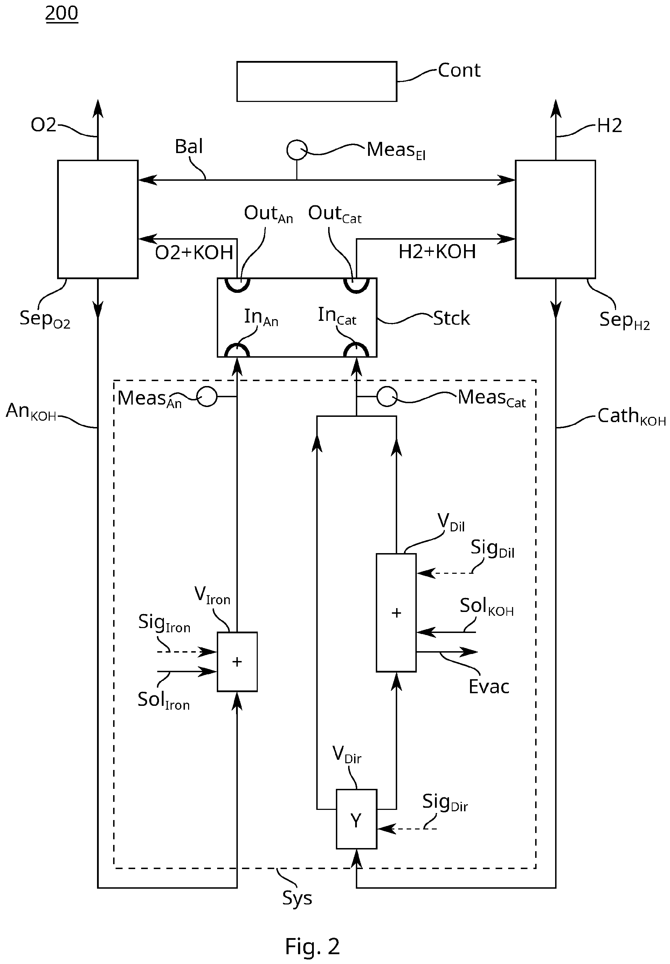

In order to maintain operational conditions favorable to the production of hydrogen during alkaline water electrolysis, the applicant proposes the electrolyzer 200 illustrated by Fig. 2, able to keep continuously iron concentration of the electrolyte within a given range of iron concentrations.

The electrolyzer comprises a stack Stck of electrolysis cells each similar to the cell 100 illustrated by Fig. 1 in their structure and functioning principles, and is configured to function as described below.

A first hydraulic loop is dedicated to the anolyte $An_{KOH}$, the stack Stck comprising an anolyte inlet $In_{An}$ through which the anolyte is brought into the stack, and an anolyte output $Out_{An}$ through which the anolyte $An_{KOH}$ (KOH-liquid) and produced oxygen gas $O_2$ are retrieved from the stack.

After exiting the stack, the KOH liquid-oxygen gas mixture indicated as "$O_2$+KOH" in the figure is brought to an oxygen gas-liquid separator $Sep_{O2}$ configured to separate the mixture into gas oxygen $O_2$ to be stored separately, and anolyte $An_{KOH}$ to be resent to anolyte inlet $In_{An}$.

On the way back to the stack, as a device configured to inject iron into the electrolyte, an anolyte 3-way valve $V_{Iron}$ is configured so as to inject an iron-containing solution $Sol_{Iron}$ into the anolyte upon reception of a control signal $Sig_{Iron}$.

Upstream of the anolyte inlet $In_{An}$, a measurement means $Meas_{An}$ to measure a characteristic representative of iron concentration in the anolyte is arranged, for example to measure this characteristic of the anolyte between the anolyte 3-way valve $V_{iron}$ and the anolyte inlet $In_{An}$., i.e. just upstream of the stack so as to obtain a concentration of iron representative of the anolyte entering the stack. Alternatively, measurement means $Meas_{An}$ may be positioned at any other location deemed suitable by the practitioner.

A second hydraulic loop is dedicated to the catholyte $Cath_{KOH}$, the stack Stck comprising a catholyte inlet $In_{Cat}$ through which the catholyte, indicated as $Cat_{KOH}$, is brought into the stack, and a catholyte output $Out_{Cat}$ through which the catholyte $Cath_{KOH}$ (KOH-liquid) and produced hydrogen gas H2 are retrieved from the stack.

After exiting the stack, the KOH liquid-hydrogen gas mixture indicated as "H2+KOH" in the figure is brought to a hydrogen gas-liquid separator $Sep_{H2}$ configured to separate the mixture into gas hydrogen $O_2$ to be stored separately, and catholyte $Cath_{KOH}$ to be resent to catholyte inlet $In_{Cat}$.

On the way back to the stack, a directing 3-way valve $V_{Dir}$ is arranged as a directing device, configured to determine one of two paths to send the catholyte to the inlet $In_{Cat}$ of the stack.

A first path is the default one, that is usually taken by the catholyte when the iron concentration is within the given range of iron concentration, and that brings the catholyte directly back to the catholyte inlet $In_{Cat}$, i.e. without further modification of the composition of the catholyte.

A second path is taken by the catholyte upon reception by the directing 3-way valve $V_{Dir}$ of a signal $Sig_{Dir}$ controlling the valve to direct the catholyte towards the second path when the concentration of iron in the catholyte requires to be lowered.

The second path comprises a dilution device $V_{Dil}$ configured to dilute the catholyte by evacuating a volume Evac of the catholyte out of the electrolyzer and inject into the electrolyzer a volume of fresh KOH solution $Sol_{KOH}$, as a function of a signal $Sig_{Dil}$, and bring this diluted catholyte to the inlet $In_{Cat}$ of the stack Stck. The fresh KOH solution should have an iron concentration lower than the circulating catholyte so as to effectively lower the iron concentration of the catholyte, and preferably a KOH concentration close or equal to that the circulating catholyte to keep constant the operational parameters of the electrolyzer. If the electrolyte is based on another alkaline than KOH, this other alkaline has to be used instead of KOH.

The dilution device is configured so that the volume of evacuated catholyte and the volume of injected KOH solution are the same, so as to maintain constant the volume of electrolyte in the electrolyzer. Such a device can be made of conventional electrically-controlled valves.

Upstream of the catholyte inlet $In_{Cat}$, a measurement means $Meas_{Cat}$ to measure a characteristic representative of iron concentration in the catholyte is arranged, for example to measure this characteristic of the catholyte between the second catholyte 3-way valve $V_{KOH}$ and the catholyte inlet $In_{Cat}$, i.e. just upstream of the stack so as to obtain a concentration of iron representative of the catholyte entering the stack.

A balancing line Bal hydraulically connects the hydrogen gas-liquid separator $Sep_{H2}$ to the oxygen gas-liquid separator $Sep_{O2}$ to balance internal pressure between the anolyte sides and the catholyte sides of the cells of the stack during operation of the electrolyzer.

A measurement means $Meas_{El}$ to measure a characteristic representative of iron concentration in the electrolyte is arranged, for example connected to the balancing line Bal.

Also, an electronic controller Cont is configured so as to control the three-way valves $V_{Iron}$, $V_{Dir}$, $V_{DIW}$, and $V_{KOH}$ via the signals Sigiron, Sigriit, $Sig_{DIW}$ and $Sig_{KOH}$, respectively, for regulating the iron concentration in the electrolyte by inducing either addition or subtraction of iron from the electrolyte.

Generation of these signals is made in accordance with measurement results of the measurements means $Meas_{An}$, $Meas_{Cat}$ and/or $Meas_{El}$, that are functionally connected to the electronic controller Cont.

A characteristic representative of iron concentration may be the concentration of any given oxidation state of iron in the electrolyte.

The elements $V_{Iron}$, $V_{Dir}$, $V_{Dil}$, $Meas_{An}$, $Meas_{Cat}$ and $Meas_{El}$ form a system Sys configured to maintain iron concentration in the electrolyte within the target range of iron concentration.

Depending on the operational characteristics of the electrolyzer, either injection of iron into the electrolyte or filtering of the iron out of the electrolyte may be unnecessary; in such a situation, only relevant parts of the system Sys may be installed on the electrolyzer.

Such situations may arise for example when iron provided by the elements of the hydraulic circuit is sufficient to maintain the iron concentration in the electrolyte over the lower limit of the target range, or when incorporation of iron onto the anodes and deposition of iron onto the cathode prevents the iron concentration to go over the upper limit of the target range, especially when elements of the hydraulic circuit do not release iron or only in low quantity in the electrolyte.

$Meas_{An}$, $Meas_{Cat}$ and $Meas_{El}$ are configured to measure a characteristic representative of iron concentrations at specific sections of the hydraulic circuitry, but a practitioner may choose other sections of the hydraulic circuitry to characterize the electrolyte, for the example for the sake of accessibility of the measurement means or the characterize the electrolyte at a section of the hydraulic circuitry deemed more adequate to characterize the iron concentration.

The electronic controller Cont may comprise a system controlling the conventional functions of a hydrogen producing electrolyzer, for example circulation of fluids in the installation by controlling pumps and valves and receiving measurements by sensors for safety issues or feedback from the running process, and may be further configured as described above for the regulation of iron concentration in the electrolyte.

## The electrolyzer - Second Type, filtration

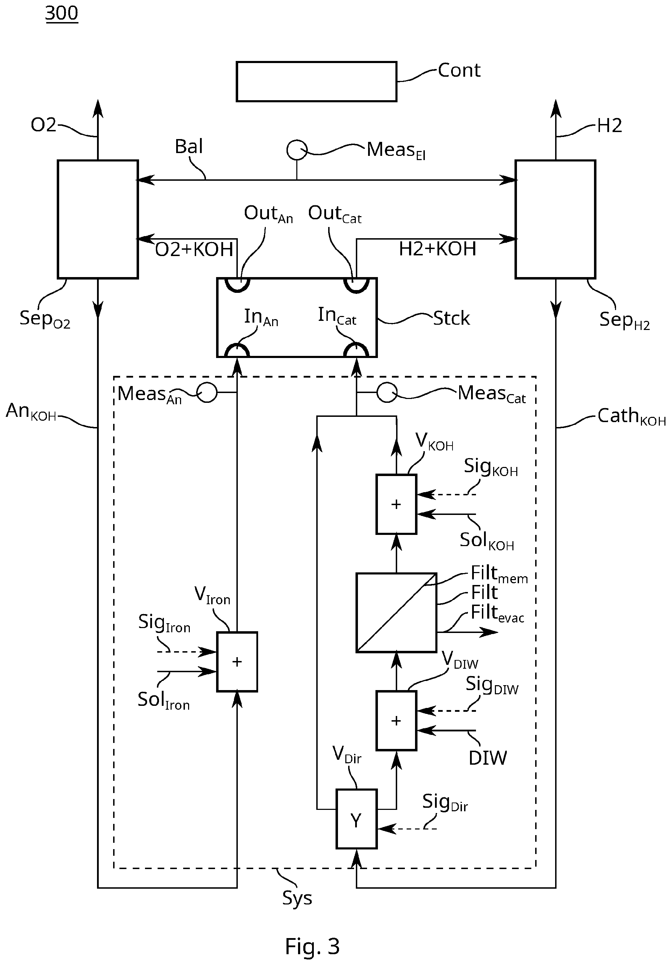

The second option, illustrated by electrolyzer 300 of Fig. 3, differs from the first option only as to the characteristics and function of the second path taken by the catholyte on its way back to the stack. For other sections of the electrolyzer, one may refer to the description of the first option and Fig. 2.

From upstream to downstream, the second path of this second option comprises a first catholyte 3-way valve $V_{DIW}$, an iron filter Filt, and a second catholyte 3-way valve $V_{KOH}$, and is designed to filter iron out of the catholyte prior to bring the catholyte back to the stack Stck.

As a device configured to enable dilution of the catholyte, the first catholyte thee-way-valve $V_{DIW}$ is configured to supply the catholyte with deionized water upon reception of a controlling signal $Sig_{DIW}$.

The iron filter Filt is configured to filter iron out of the catholyte $Cath_{KOH}$ through a membrane $Filt_{mem}$.

For an optimal filtration, it is possible to dilute the catholyte first, for example by addition of deionized water by using the first catholyte thee-way-valve $V_{DIW}$ accordingly to the operational specification of the filter (pressure, range of acceptable concentrations etc...) .

Upon filtration, a portion of the catholyte is evacuated through an evacuation $Filt_{evac}$, evacuating the filtered iron and a certain amount of KOH.

Purified anolyte, obtained by filtering the catholyte by means of the filter Filt, circulates towards the second catholyte 3-way valve $V_{KOH}$ where it is supplemented with a KOH-based solution so as to compensate for dilution caused by the supplied deionized water at the first catholyte 3-way valve $V_{KOH}$ and by the loss of KOH during filtration at the iron filter Filt.

Finally, the purified and supplemented catholyte is sent back to the catholyte inlet $In_{Cat}$ of the stack Stck.

The elements $V_{Iron}$, $V_{Dir}$, $V_{DIW}$, $V_{KOH}$, $Meas_{An}$, $Meas_{Cat}$ and $Meas_{El}$ form a system Sys configured to maintain iron concentration in the electrolyte within the target range of iron concentration.

## The electrolysis

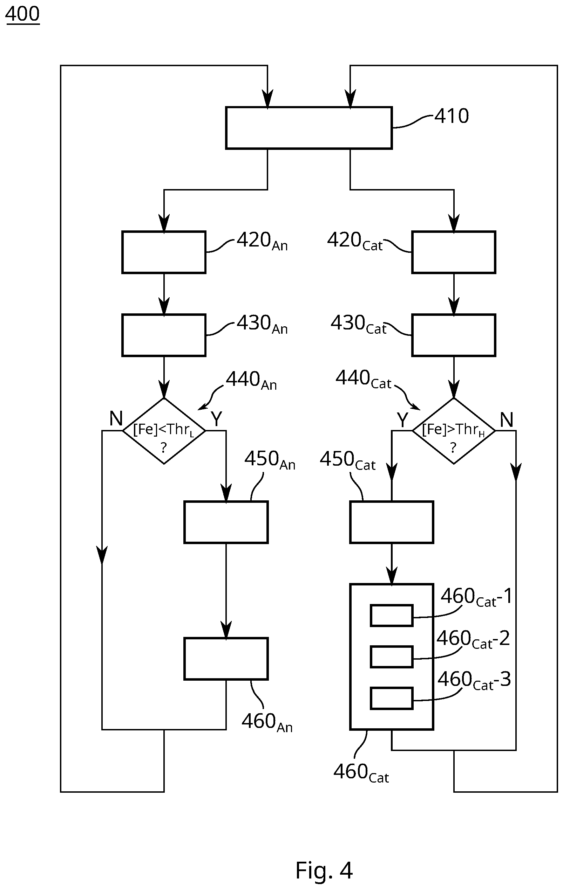

The electrolyzer described above with the help of Fig. 2 and Fig. 3 can be used according to the alkaline water electrolysis process 400 described hereunder, devised to regulate concentration of iron in the electrolyte and illustrated in Fig. 4.

At a step 410, the electrolyte El, that can be considered as a sum of the anolyte $An_{KOH}$ and the catholyte $Cat_{KOH}$, is circulating within the stack Stck.

From this point, it is convenient to follow two logical branches, one dedicated to the anolyte with steps $420_{An}$ to $460_{An}$ and another one dedicated to the catholyte with steps $420_{Cat}$ to $460_{cat}$.

Also, even though the steps of the process are presented in the form of a sequence, it is to be understood that they in fact occur concurrently and continuously.

At the step $420_{An}$, the anolyte exiting from the stack Stck is brought to the oxygen gas-liquid separator $Sep_{O2}$.

At the step $430_{An}$, a measurement is performed by means $Meas_{An}$ to measure a characteristic representative of iron concentration in the anolyte, such as the concentration of an oxidized state of iron in the anolyte just upstream of the stack Stck, and a result of the measure is sent to the electronic controller Cont by any means known in the art for similar purposes, for example by means of electrical cables.

Characterizing the anolyte just upstream of the stack allows for a better control over the composition of the anolyte entering the stack compared to other locations. Still, the anolyte may be characterized in any other location deems pertinent by the practitioner.

The electronic controller Cont is configured to compare, at the test step $340_{An}$, the result of this measure with a low threshold $Thr_L$ defined by the practitioner of the electrolyzer and stored in an electronic memory within the electronic controller.

The low threshold $Thr_L$ is defined by the practitioner so as to insure that the iron concentration [Fe] stays over the lower limit of the target range, for example as a function of the typical variation rate of the iron concentration and the inertia of the electrolyzer upon taking corrective steps to maintain the concentration in the electrolyzer.

As a characteristic representative of iron concentration in the electrolyte, one may for example determine photometrically the quantity of Fe(II) in the electrolyte: TPTZ (2,4,6-tri-2-pyridinyl-1,3,5-triazine) forms a complex with Fe(II) that can be quantified by colorimetric detection at 594 nm as a measure of iron concentration. A table established experimentally indicates an equivalence between the measured Fe(II) quantity and a corresponding iron concentration in the anolyte, so that the measured characteristic can be readily converted into an iron concentration in the anolyte.

If the result of the test step $340_{An}$ shows that the iron concentration [Fe] is not lower than the low threshold $Thr_L$, then no specific action is taken and the anolyte is brought back to the stack without modification as to its composition (branch N of the test step $440_{An}$ in process 400, Fig. 3).

In contrast, if the result of the test step $340_{An}$ shows that the iron concentration [Fe] is lower than the low threshold $Thr_L$ (branch Y of the test step $440_{An}$ in process 400, Fig. 3), then the signal $Sig_{Iron}$ is generated at the step $450_{An}$ and sent to the anolyte 3-way valve $V_{Iron}$ by the electronic controller Cont.

In response to the received signal $Sig_{Iron}$, the anolyte 3-way valve $V_{Iron}$ delivers a quantity of the iron-containing solution $Sol_{Iron}$ into the anolyte being brought back to the stack Stck, at the step $460_{An}$. In this manner, a quantity of iron is added into the electrolyte in response to the measured characteristic representative of iron concentration.

It is advantageous to deliver a quantity of the iron-containing solution $Sol_{Iron}$ into the anolyte rather than into the catholyte because, while iron is beneficial to the anodes, it is detrimental to the cathodes, and although the anolyte and the catholyte are in hydraulic communication via the diaphragms of the individual electrolysis cells and the balancing line Bal, iron concentration is not or at least not immediately homogeneous between the anolyte and the catholyte after the iron injection into the anolyte.

The iron-containing solution may consist of an aqueous solution of iron sulfate ($FeSO_4$ or $Fe_2(SO_4)_3$) of a given concentration.

This quantity can be determined by the electronic controller as a function of the volume of electrolyte in the electrolyzer, the concentration of iron in the iron-containing solution, and a difference between the concentration of iron in the anolyte and a first target iron concentration in the anolyte, defined by the practitioner and over the low threshold $Thr_L$, preferably in the range of 1 mg/l to 3 mg/l, 2 mg/l for example.

The electronic controller and the anolyte 3-way valve $V_{Iron}$ can be configured to deliver the quantity of iron-containing solution progressively, so as to avoid a localized peak of iron concentration in the hydraulic circuit.

Concurrently to treatment of the anolyte, treatment of the catholyte occurs.

At the step $420_{Cat}$, the catholyte exiting from the stack Stck is brought to the hydrogen gas-liquid separator $Sep_{H2}$.

At the step $430_{Cat}$, a measurement is performed by means $Meas_{Cat}$ to measure a characteristic representative of iron concentration in the catholyte, such as the concentration of an oxidized state of iron in the catholyte just upstream of the stack Stck, and a result of the measure is sent to the electronic controller Cont by any means known in the art for similar purposes, for example by means of electrical cables.

Characterizing the catholyte just upstream of the stack allows for a better control over the composition of the catholyte entering the stack compared to other locations. Still, the catholyte may be characterized in any other location deems pertinent by the practitioner.

The electronic controller Cont is configured to compare, at the test step $440_{Cat}$, the result of this measure with a high threshold $Thr_H$ defined by the practitioner of the electrolyzer and stored in an electronic memory within the controller.

The high threshold $Thr_H$ is defined by the practitioner so as to insure that the iron concentration [Fe] stays below the upper limit of the target range, for example as a function of the typical variation rate of the iron concentration and the inertia of the electrolyzer upon taking corrective steps to maintain the concentration in the electrolyzer.

As a characteristic representative of iron concentration in the catholyte, one may for example determine photometrically the quantity of Fe(II) in the electrolyte: TPTZ (2,4,6-tri-2-pyridinyl-1,3,5-triazine) forms a complex with Fe(II) that can be quantified by colorimetric detection at 594 nm as a measure of iron concentration. A table established experimentally indicates an equivalence between the measured Fe(II) quantity and a corresponding iron concentration in the catholyte, so that the measured characteristic can be readily converted into an iron concentration in the catholyte.

If the result of the test shows that the iron concentration [Fe] is below the high threshold $Thr_H$, then no specific action is taken an the catholyte is brought back to the stack without modification as to its composition (branch N of the test step $440_{Cat}$ in process 400, Fig. 4).

In contrast, if the result of the test shows that the iron concentration [Fe] is above the high threshold $Thr_H$ (branch Y of the test step $440_{Cat}$ in process 400, Fig. 3), then the signals $Sig_{Dir}$, and, depending on the type -First type or Second Type - of electrolyzer, $Sig_{Dil}$ or $Sig_{DIW}$ and $Sig_{KOH}$ are generated and respectively sent to the directing 3-way valve $V_{Dir}$, and the dilution device $V_{Dil}$ or the first catholyte three-way-valve $V_{DIW}$, and the second catholyte 3-way valve $V_{KOH}$ by the electronic controller Cont at the step $450_{Cat}$.$

In response to test of step $450_{Cat}$, iron concentration is lowered in the electrolyte at the step $460_{Cat}$.

In the case of the First Type electrolyzer, dilution is employed to lower iron concentration in the electrolyte. In response to the received signal $Sig_{Dir}$ the directing 3-way valve $V_{Dir}$ directs the circulating catholyte towards the dilution device $V_{Dil}$. In response to the received signal $Sig_{Dil}$, the dilution device $V_{Dil}$ evacuates a volume Evac of the catholyte out of the electrolyzer and inject into the electrolyzer a volume of fresh KOH solution $Sol_{KOH}$. The dilution device may function in a binary way by diluting or not the catholyte at a fixed rate, or may be configured to evacuate a volume of catholyte that depends on the signal $Sig_{Dil}$, that may be generated so as to reflect, as one criterion to modulate the level of wished dilution, a difference between, for example, the high threshold $Thr_H$ and the measured iron concentration in the catholyte, as calculated by the electronic controller Cont.

In the case of the Second Type electrolyzer, filtration is employed to lower iron concentration in the electrolyte In response to the received signals $Sig_{Dir}$, $Sig_{DIW}$, and $Sig_{KOH}$, the directing 3-way valve $V_{Filt}$ directs the circulating catholyte towards the iron filter Filt, the first catholyte thee-way-valve $V_{DIW}$ injects deionized water into the catholyte for dilution, and the second catholyte 3-way valve $V_{KOH}$ supplements the filtered catholyte with a KOH-based solution, at the step $360_{Cat}$ that consists in a filtration of the catholyte. In this way, a first substep $460_{Cat}$-1 of catholyte dilution, a second substep $460_{Cat}$-2 of membrane filtration, and a third substep $460_{Cat}$-3 of KOH supplementation are performed in this order. The dilution level of the catholyte can be determined by the electronic controller as a function of the operational specifications of the filter, and the $Sig_{DIW}$ can be defined so as to reflect this dilution level. The supplementation of the filtered catholyte with a KOH-based solution can be determined by the electronic controller as a function of the dilution level and the loss of KOH due to the portion of the catholyte that is evacuated through the evacuation $Filt_{evac}$ to evacuate the filtered iron. In the present example, KOH represents the alkaline element of the electrolyte; when another alkaline element is used, such as sodium hydroxide, the corresponding alkaline element is used. The electronic controller can be configured to activate the filtration of the catholyte so as to obtain a second target iron concentration in the catholyte, defined by the practitioner and below the high threshold $Thr_H$, preferably in the range of 1 mg/l to 3 mg/l, 2 mg/l for example.

It is advantageous to lower de concentration of iron in the catholyte rather than in the anolyte because while iron is detrimental to the cathodes, it is beneficial to the anodes, and although the anolyte and the catholyte are in hydraulic communication via the diaphragms of the individual electrolysis cells and the balancing line Bal, iron concentration is not or at least not immediately homogeneous between the anolyte and the catholyte after filtering. After lowering the iron concentration, the catholyte is brought back to the stack Stck.

The measurements means $Meas_{An}$, $Meas_{Cat}$ and $Meas_{El}$ allow obtaining a first value, a second value and a third value of a characteristic representative of iron concentration in the electrolyte, that may be different from one another due the dynamic of the reactions occurring with the electrolyzer.

It is to be noted that the test conditions of steps $440_{An}$ and $440_{Cat}$ are consistent with one another in normal operating conditions.

Also, instead of using two distinct measurement means $Meas_{An}$ and $Meas_{Cat}$ respectively dedicated to the anolyte $An_{KOH}$ and the catholyte $Cath_{KOH}$, one may use a common measurement means, for example the measurement means $Meas_{El}$ connected to the balancing line Bal, otherwise based on the same principles and configured as $Meas_{An}$

and Meas$_{Cat}$.

In that case, in the process 400 described above, the steps are the same, except that instead of using measurements performed by Meas$_{An}$ and Meas$_{Cat}$, measurements performed by Meas$_{El}$ are used.

Alternatively, any one of the measurement means Meas$_{An}$, Meas$_{Cat}$, and Meas$_{El}$ may be used to measure a characteristic representative of a concentration of iron in the electrolyte and to be used in any of the test steps 440$_{An}$ and 440$_{Cat}$ to be compared to the low threshold Thr$_L$ and to the high threshold Thr$_H$, as determined by the practitioner.

Although the process 400 described above represents examples for a continuous operation of the electrolyzers 200 and 300 while controlling iron concentration in the electrolyte, the invention is not limited to this type of operation, and a batch process is also contemplated by the applicant.

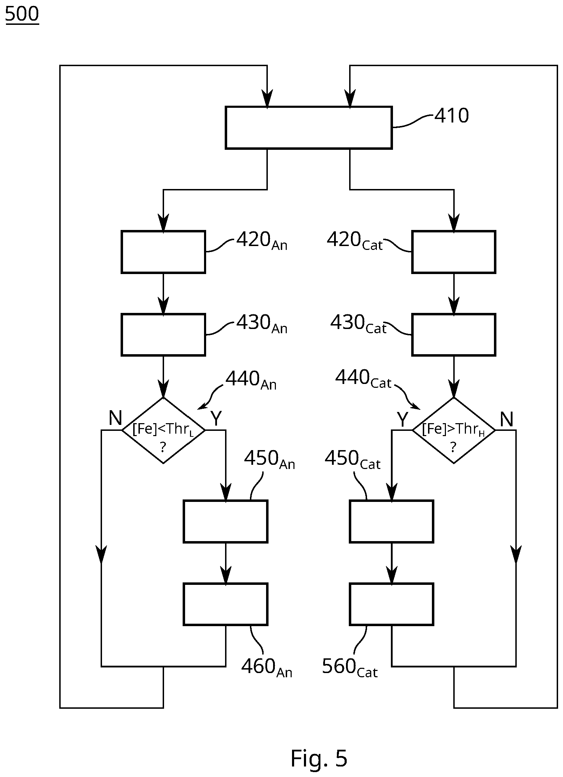

In particular, in the process 500 illustrated by Fig. 5, the dilution or filtration operation of step 460$_{Cat}$ of the process 400 is changed for a replacement 560$_{Cat}$ of a part or the totality of the electrolyte contained in the electrolyzer upon determination at the test step 440$_{Cat}$ that the iron concentration exceeds the high threshold Thr$_H$, so as to bring back the iron concentration within the target range; except this operation, the process 500 is the same as process 400 and identical references signs refer to identical steps. The composition and the volume of the fresh electrolyte can be calculated by the practitioner, based on the volume of electrolyte on the electrolyzer and the measured concentration of iron.

Processes 400 and 500 are not mutually exclusive but in fact are complementary: application of the process 400 allows to extend the period of use of the electrolyzer without maintenance or exchange of the electrolyte, but the process 500 allows better defining the timing where a replacement of electrolyte is needed after having already extended its lifetime thanks to the filtering of process 400.

Advantages of the invention are that batch replacement of the electrolyte can be spaced and more precisely timed, saving cost, time and manual labor, and so as to place the electrodes in an environment favorable to operations of the electrolyzer.

Further, the electrolyzer can also be used continuously over long periods of time while insuring an optimal functioning and a reduction in maintenance cost, thanks to the continuous control and correction of iron concentration in the electrolyte.

The example above describes the electrodes, anode and cathode, as made of or coated with Raney nickel used as catalyst of the electrolysis, and the electrolyte as made essentially of potassium hydroxide (KOH), meaning that the main constituent of the electrolyte is a potassium hydroxide solution, as well-known in the field.

The cathode may be a PGM-based cathode (PGM standing for Platinum Group Metals, including platinum, palladium, rhodium, ruthenium, iridium, and osmium) and the electrolyte maybe based on sodium hydroxide (NaOH), meaning that the main constituent of the electrolyte is a sodium hydroxide solution, as well-known in the field.

As already mentioned, consideration of iron as an impurity is only a specific application of the process and the device described hereabove. This process and this device are suitable to be applied to other kind of impurities present in the electrolyte, depending of the specific objectives of the practitioner.

Each of the examples mentioned in this document can be freely combined within technical limits understood by the practitioner in the field of the invention.

Other variations to the disclosed examples can be understood and effected by those skilled in the art in practicing the claimed invention, from a study of the drawings, the disclosure, and the appended claims.

**Claims**

1. An alkaline water electrolysis process (400, 500) making use of an electrolyzer comprising a stack (Stck) of electrolysis cells (100) each comprising an anode (An) and a cathode (Cat), the electrolyzer being configured to contain an electrolyte (El) made of an anolyte (An$_{KOH}$) and a catholyte (Cath$_{KOH}$), the process being **characterized in that** it comprises the steps of:

   - measuring (420$_{An}$, 430$_{Cat}$) at least one characteristic representative of a concentration of an impurity in the electrolyte;
   - regulating (460$_{An}$, 460$_{Cat}$) the concentration of the impurity in the electrolyte based on the at least one measured characteristic in the electrolyte so as to maintain a concentration of the impurity within a target range by lowering (460$_{Cat}$) the concentration of the impurity in the electrolyte or delivering (460$_{An}$) a quantity of the impurity into the electrolyte.

2. The process (400, 500) according to claim 1, wherein the anode comprises nickel, the impurity is iron, and the target range is defined as between 0.2 mg/l and 6 mg/l.

3. The process (500) according to any one of claims 1 and 2, wherein the step of regulating the concentration of the impurity in the electrolyte comprises a step of replacing ($560_{Cat}$) at least a part of the electrolyte comprised in the electrolyzer.

4. The process (400, 500) according to any one of claims 1 to 3, comprising a step ($460_{An}$) of injecting a quantity of the impurity into the electrolyte based on a first one of the at least one measured characteristic.

5. The process (400, 500) according to claim 4, wherein at the step ($460_{An}$) of injecting the quantity of the impurity into the electrolyte, the quantity of the impurity is injected into the anolyte ($An_{KOH}$).

6. The process (400) according to any one of claims 1 to 5, comprising a step ($460_{Cat}$) of diluting the electrolyte based on a second one of the at least one measured characteristic.

7. The process (400) according to any one of claims 1 to 5, comprising a step ($460_{Cat}$) of filtering the impurity out of the electrolyte based on a second one of the at least one measured characteristic.

8. The process (400) according to claim 7, wherein the step ($460_{Cat}$) of filtering the impurity out of the electrolyte comprises:

- a substep ($460_{Cat}$-1) of diluting the electrolyte; and
- a substep ($460_{Cat}$-3) of alkaline element supplementation into the electrolyte so as to make up for the dilution of the electrolyte and a loss of alkaline element during the step of filtering the impurity out of the electrolyte.

9. The process (400) according to claim 8, wherein the electrolyte is diluted with deionized water and the alkaline element supplementation consists in adding a KOH solution to the electrolyte.

10. The process (400) according to any one of claims 7 to 9, wherein the step ($460_{Cat}$) of filtering the impurity out of the electrolyte comprises a substep ($460_{Cat}$-2) of passing the electrolyte through a filtering membrane filtering the impurity out of the electrolyte.

11. An alkaline water electrolyzer (200; 300) comprising an electronic controller (Cont), a stack (Stck) of electrolysis cells (100) each comprising an anode (An) and a cathode (Cat), the electrolyzer being configured to contain an electrolyte (El) made of an anolyte ($An_{KOH}$) and a catholyte ($Cath_{KOH}$), the electrolyzer being **characterized in that** it further comprises a system (Sys) controlled by the electronic controller (Cont) configured to maintain a concentration of an impurity in the electrolyte within a target range by measuring a characteristic representative of the concentration of the impurity in the electrolyte and, in response to the measured concentration of the impurity, add a quantity of the impurity into the electrolyte.

12. The alkaline water electrolyzer (200; 300) according to claim 11, wherein the anode comprises nickel, the impurity is iron, and the target range is defined as between 0.2 mg/l and 6 mg/l.

13. The alkaline water electrolyzer (200; 300) according to claim 11 or 12, wherein the system (Sys) comprises:

- a first measurement means ($Meas_{An}$) configured to measure a first value of a characteristic representative of the concentration of the impurity in the electrolyte; and
- a device ($V_{Iron}$) configured to inject a solution ($Sol_{Iron}$) containing a quantity of the impurity into the electrolyte (El), the electronic controller (Cont) being further configured to command the device ($V_{Iron}$) so as to inject the solution ($Sol_{Iron}$) containing the quantity of the impurity into the electrolyte based on the measured first value.

14. The alkaline water electrolyzer (200) according to any one of claims 11 to 13, wherein the system (Sys) comprises:

- a second measurement means ($Meas_{Cat}$) configured to measure a second value of a characteristic representative of the concentration of the impurity in the electrolyte (El); and
- a dilution device ($V_{Dil}$) configured to dilute the catholyte,

the electronic controller being further configured to command a directing device ($V_{Dir}$) so as to direct the electrolyte (El) toward the diluting device ($V_{Dil}$) based on the measured second value.

15. The alkaline water electrolyzer (300) according to any one of claims 11 to 13, wherein the system (Sys) comprises:

- a second measurement means ($Meas_{Cat}$) configured to measure a second value of a characteristic representative of the concentration of the impurity in the electrolyte (El); and
- a filter (Filt) configured to filter the impurity out of the electrolyte (El),

the electronic controller being further configured to command a directing device ($V_{Dir}$) so as to direct the electrolyte (El) toward the filter (Filt) based on the measured second value.

100

DC

I

e⁻     e⁻

Cont

O₂     H₂

An     Cat

Mem   H₂O   OH⁻

El$_{An}$
El$_{Cat}$ } El

Fig. 1

Fig. 2

300

Fig. 3

400

$410$

$420_{An}$     $420_{Cat}$

$430_{An}$     $430_{Cat}$

$440_{An}$     $440_{Cat}$

N   $[Fe]<Thr_L$?   Y     Y   $[Fe]>Thr_H$?   N

$450_{An}$     $450_{Cat}$

$460_{Cat}$-1

$460_{Cat}$-2

$460_{Cat}$-3

$460_{An}$     $460_{Cat}$

Fig. 4

500

```
                    ┌──────────────┐
                    │      410      │──── 410
                    └──────────────┘
         ┌─────────────────┴─────────────────┐
         ▼                                     ▼
   ┌──────────┐                           ┌──────────┐
   │  420An   │── 420An        420Cat ────│  420Cat  │
   └──────────┘                           └──────────┘
         │                                     │
         ▼                                     ▼
   ┌──────────┐                           ┌──────────┐
   │  430An   │── 430An        430Cat ────│  430Cat  │
   └──────────┘                           └──────────┘
         │              440An    440Cat        │
         ▼               ▲          ▼           ▼
      N ◇ [Fe]<ThrL  Y         Y  [Fe]>ThrH ◇ N
        ◇    ?                        ?      ◇
                                              
                  450An    450Cat
         ▼                                     ▼
   ┌──────────┐                           ┌──────────┐
   │          │                           │          │
   └──────────┘                           └──────────┘
         │                                     │
         ▼                                     ▼
   ┌──────────┐                           ┌──────────┐
   │          │                           │          │
   └──────────┘                           └──────────┘
            460An      560Cat
```

Fig. 5

Europäisches
Patentamt

European
Patent Office

Office européen
des brevets

# EUROPEAN SEARCH REPORT

Application Number

EP 22 21 6122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 4 105 516 A (MARTINSONS ALEKSANDRS ET AL) 8 August 1978 (1978-08-08)<br>* column 5, line 19 - line 54 *<br>* claim 1 * | 1,4,11,<br>13<br>2,3,<br>5-10,12,<br>14,15 | INV.<br>C25B1/04<br>C02F1/00<br>C25B15/02<br>C25B15/029<br>C25B15/08 |
| A | WO 2017/115709 A1 (DE NORA PERMELEC LTD [JP]) 6 July 2017 (2017-07-06)<br>* the whole document * | 1-15 | |
| A | JP 2007 107088 A (KANEKA CORP) 26 April 2007 (2007-04-26)<br>* the whole document * | 1-15 | |
| A | US 2008/257749 A1 (BULAN ANDREAS [DE] ET AL) 23 October 2008 (2008-10-23)<br>* the whole document * | 1-15 | |

**TECHNICAL FIELDS SEARCHED (IPC)**

C25B
C02F

The present search report has been drawn up for all claims

| Place of search | Date of completion of the search | Examiner |
|---|---|---|
| Munich | 30 November 2023 | Thorner, Gentien |

EPO FORM 1503 03.82 (P04C01)

## ANNEX TO THE EUROPEAN SEARCH REPORT
## ON EUROPEAN PATENT APPLICATION NO.

EP 22 21 6122

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2023

| Patent document cited in search report | | Publication date | Patent family member(s) | | Publication date |
|---|---|---|---|---|---|
| US 4105516 | A | 08-08-1978 | BE | 868871 A | 10-01-1979 |
| | | | CA | 1117896 A | 09-02-1982 |
| | | | DE | 2829904 A1 | 18-01-1979 |
| | | | FR | 2397470 A1 | 09-02-1979 |
| | | | GB | 2000807 A | 17-01-1979 |
| | | | JP | S5418497 A | 10-02-1979 |
| | | | NL | 7806879 A | 15-01-1979 |
| | | | US | 4105516 A | 08-08-1978 |
| WO 2017115709 | A1 | 06-07-2017 | CA | 3009732 A1 | 06-07-2017 |
| | | | CN | 108431303 A | 21-08-2018 |
| | | | DK | 3399070 T3 | 22-03-2021 |
| | | | EP | 3399070 A1 | 07-11-2018 |
| | | | ES | 2861451 T3 | 06-10-2021 |
| | | | JP | 6397396 B2 | 26-09-2018 |
| | | | JP | 2017119895 A | 06-07-2017 |
| | | | KR | 20180077266 A | 06-07-2018 |
| | | | US | 2018334751 A1 | 22-11-2018 |
| | | | WO | 2017115709 A1 | 06-07-2017 |
| JP 2007107088 | A | 26-04-2007 | JP | 3893408 B1 | 14-03-2007 |
| | | | JP | 2007107088 A | 26-04-2007 |
| US 2008257749 | A1 | 23-10-2008 | BR | PI0800044 A | 16-09-2008 |
| | | | CA | 2618205 A1 | 24-07-2008 |
| | | | CN | 101302624 A | 12-11-2008 |
| | | | DE | 102007003554 A1 | 31-07-2008 |
| | | | EP | 1953270 A1 | 06-08-2008 |
| | | | JP | 5679621 B2 | 04-03-2015 |
| | | | JP | 5732111 B2 | 10-06-2015 |
| | | | JP | 2008179896 A | 07-08-2008 |
| | | | JP | 2013213284 A | 17-10-2013 |
| | | | KR | 20080069913 A | 29-07-2008 |
| | | | KR | 20150082163 A | 15-07-2015 |
| | | | SG | 144842 A1 | 28-08-2008 |
| | | | TW | 200846500 A | 01-12-2008 |
| | | | US | 2008257749 A1 | 23-10-2008 |
| | | | US | 2012325674 A1 | 27-12-2012 |

EPO FORM P0459

For more details about this annex : see Official Journal of the European Patent Office, No. 12/82